# EUROPEAN PATENT APPLICATION

(11) **EP 4 495 433 A1**
(43) Date of publication of application: **22.01.2025**
(21) Application number: 23187052.8
(22) Date of filing: 21.07.2023
(51) Int. Cl.: F16B 2/10, F16B 2/24, F16B 5/06, F16B 5/12, F16B 17/00, F16B 45/00

(54) **FASTENER, FASTENING SYSTEM AND METHOD**

(71) Applicant: Hilti Aktiengesellschaft, 9494 Schaan (LI)
(72) Inventor: Schmitz, Robert, 6800 Feldkirch (AT); Marnette, Jascha, 9466 Sennwald (CH); Schulte Suedhoff, Eric, 6800 Feldkirch (AT); Wörgartner, Peter, 6372 Oberndorf (AT)
(74) Representative: Hilti Aktiengesellschaft Corporate Intellectual Property

(57) **Abstract**

A fastener for attaching a component to a support structure comprises a fastening element comprising a shaft that has an end face facing in the fastening direction, a clip member having a support element and a trap element that is moved from an open position to a closed position to trap an eyelet of the component on the fastening element.

## Description

### Technical Field

The present invention relates to a fastener for attaching a component to a support structure. Further, the present invention relates to a fastening system and a method for attaching a component to a support structure.

### Background Art

Fasteners and fastening systems are known which are used for attaching components, such as rails or hangers, to a support structure, such as a wall or a ceiling. It is well known to temporarily attach such a fastener to a tool nose of a setting tool and then fastening the fastener to the support structure using the setting tool. During fastening, the component needs to be manually held in position between the fastener and the support structure, which in some circumstances may be cumbersome, in particular if the fastening point is poorly accessible.

### Summary of Invention

According to a first aspect of the invention, a fastener for attaching a component having an eyelet to a support structure in a fastening direction comprises a fastening element configured to be driven into the support structure and comprising a shaft that has an end face facing in the fastening direction, a clip member having a support element attached to the fastening element and a trap element configured to be moved from an open position to a closed position, wherein, in the open position, a gap having a gap width is formed between the trap element and the end face allowing placing the eyelet through the gap and over the end face onto the fastening element, and in the closed position, the gap width is reduced to trap the eyelet on the fastening element. According to a preferred embodiment, the gap is completely closed in the closed position of the trap element. By trapping the eyelet on the fastening element, the component may be locked to the fastener and held in position more easily, or even without the need of manual action. In this way, for example overhead applications are facilitated.

According to an embodiment, the clip member comprises a sheet material having a support section forming the support element, and a trap section forming the trap element. According to a preferred embodiment, the sheet material has a bending section about which the trap section is bent relative to the support section when the trap element is moved from the open position to the closed position. According to an even more preferred embodiment, the bending section is weakened, or perforated.

According to a further embodiment, the trap element comprises a hole configured to receive the fastening element. When the fastening element is received in the hole, it is easier for a user to ensure that the gap width is reduced far enough to trap the eyelet.

According to a further embodiment, the support element comprises a bumper configured to absorb residual driving energy of the fastening element. Absorbing such a residual driving energy by the support element helps preventing the fastening element from being driven too far onto the eyelet.

According to a further embodiment, the support element is formed as an end stop for the component or eyelet against the fastening direction. When the component or eyelet abuts on the support element, moving the trap element to the closed position may secure the eyelet between the support element and the trap element, preventing the component from loose wobbling around during fastening.

According to a further embodiment, the end face comprises a pointed or rounded tip pointing in the fastening direction. According to another embodiment, the end face is flat or slightly convex or concave. According to another embodiment, the fastening element comprises a nail, a pin, a stud, a rivet, an anchor or a screw.

According to a further aspect of the invention, a fastening system comprises the fastener as described herein above and the component. According to a preferred embodiment, the component comprises a ceiling hanger.

According to a further aspect of the invention, a method for attaching a component having an eyelet to a support structure in a fastening direction comprises providing a fastening system as described herein above, wherein the trap element is in the open position, placing the eyelet through the gap and over the end face onto the fastening element, moving the trap element from the open position to the closed position to trap the eyelet on the fastening element, and driving the fastening element into the support structure. It is preferred but not mandatory that the method steps are performed in the order as mentioned above. According to a preferred embodiment, moving the trap element from the open position to the closed position comprises bending the trap element relative to the support element.

According to a further embodiment, placing the eyelet onto the fastening element comprises abutting the eyelet on the support element. When the eyelet abuts on the support element, moving the trap element to the closed position may secure the eyelet between the support element and the trap element, preventing the component from loose wobbling around during fastening.

### Brief Description of Drawings

The invention will be described in more detail by way of example hereinafter with reference to the drawings. The described embodiments are only possible configurations in which the individual features may however be implemented independently of each other or may be omitted.

In the drawings:
- Fig. 1: is a perspective view of a fastener;
- Fig. 2: is a cross-sectional view of the fastening element shown in Fig. 1;
- Fig. 3: is a side view of a fastening system with a trap element in an open position; and
- Fig. 4: is a side view of the fastening system shown in Fig. 3 with the trap element in a closed position.

### Description of Embodiments

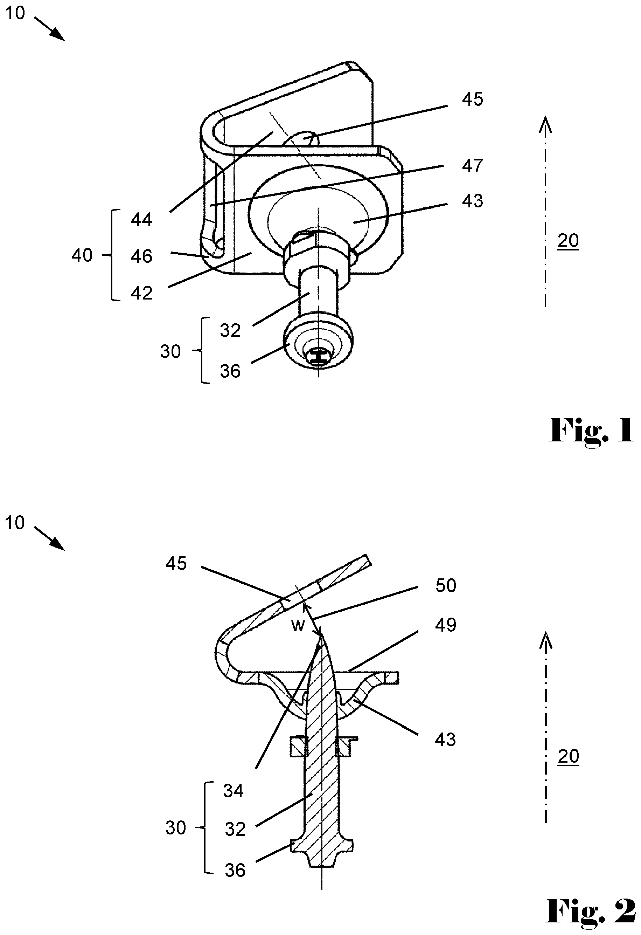

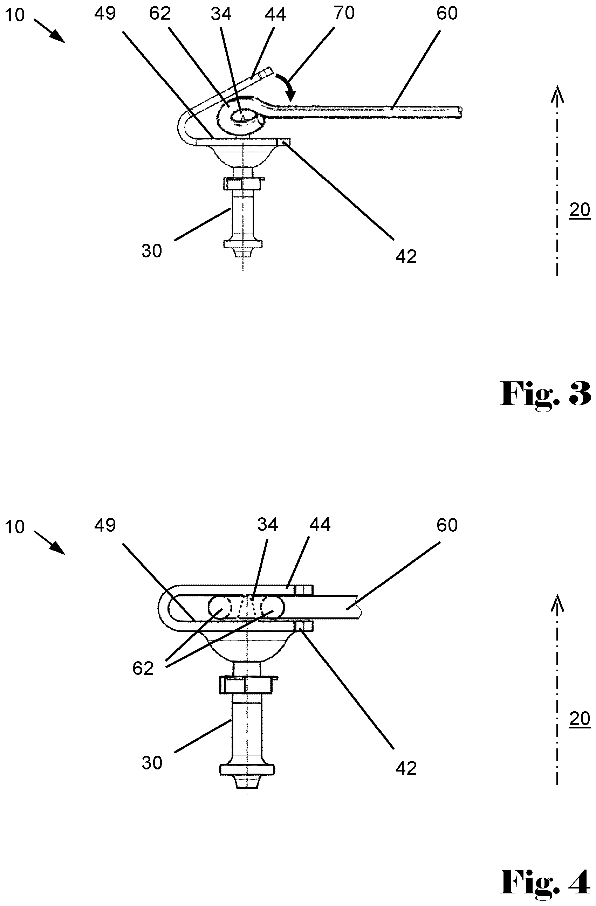

Figs. 1-2 show a fastener 10 for attaching a component (such as shown in Figs. 3-4) to a support structure (not shown) in a fastening direction 20.

The fastener 10 comprises a fastening element 30 that is configured to be driven into the support structure. To this end, the fastening element 30 is formed as a nail having a shaft 32 that has an end face 34 facing in the fastening direction 20 and a head 36. The end face 34 is formed as a pointed tip pointing in the fastening direction 20. In other embodiments (not shown), the fastening element may be formed as a pin, a stud, a rivet or a screw, each in particular having a pointed or rounded tip.

The fastener 10 further comprises a clip member 40 that has a support element 42 which is attached to the fastening element 30. To this end, the support element 42 is provided with a passage or bore that has a diameter that is slightly smaller than a diameter of the shaft 32, and the fastening element 30 is inserted, or press-fitted into the passage of the support element 42. In non-shown embodiments, a diameter of a passage in the support element is similar to or greater than a diameter of the shaft. The support element 42 comprises a bumper 43 that is formed as a curved part of the support element 42, such as a bulge or dome, and that is configured to absorb residual driving energy of the fastening element 30 when the fastening element 30 is driven into the support structure. The support member 42 further comprises an abutment face 49 facing in the fastening direction 20 and falling short of the end face 34 in the fastening direction 20. In the embodiment shown, the abutment face 49 surrounds the bumper 43.

The clip member 40 further has a trap element 44 that is shown in an open position in Figs. 1-2 and that is configured to be moved from the open position to a closed position, as described below with reference to Figs. 3-4. In the open position, as best seen in Fig. 2, a gap 50 having a gap width w is formed between the trap element 44 and the end face 34 of the fastening element 30. The trap element 44 is provided with a hole 45, in particular a through hole or a blind hole. The hole 45 is configured to receive the fastening element, or the end face of the fastening element, as likewise described below.

The clip member 40 comprises, or is made of a sheet material such as a sheet metal, for example iron or aluminium, or alloy, for example galvanized carbon steel or other steel. The sheet material has a support section that extends in a plane perpendicular to the fastening direction 20 and that forms the support element 42, a trap section that forms the trap element 44, and a bending section that forms a bending element 46 about which the trap section may be bent relative to the support section when the trap element 44 is moved from the open position to the closed position. At least in the closed position, the trap section may extend in a plane parallel to the support section, i.e. likewise in a plane perpendicular to the fastening direction 20. The bending element 46 is provided with a perforation 47 to weaken the bending element 46 and to ease bending the bending element 46, thereby making moving the trap element 44 from the open position to the closed position easier.

Figs. 3-4 demonstrate a method for attaching a component 60 that has an eyelet 62, such as a holding element, for example a ceiling hanger, to a support structure (not shown) in a fastening direction. In the shown embodiment, the component 60 comprises a wire the end of which is bent to form the eyelet 62. In non-shown embodiments, the component may comprise a sheet material bent and/or stamped to form the component and have a punch-through hole which forms the eyelet, or a threaded element having a hole that forms the eyelet. A fastening system is provided that comprises the component 60 and a fastener, such as the fastener 10 as shown in Figs. 1-2. In a preferred embodiment, the fastener 10 is provided with a trap element 44 which is in the open position.

In a first step which in particular is performed manually, the eyelet 62 is placed through the gap 50 and over the end face 34 onto the fastening element 30. The gap width w is configured to give the eyelet 62 sufficient allowance to be placed through the gap 50. In a preferred embodiment, the component 60, or the eyelet 62 abuts the support element 42, or the abutment face 49, which serves as an end stop for the eyelet 62 against the fastening direction 20. In non-shown embodiments, the eyelet is placed on the support element or between the support element and the trap element before the fastening element is inserted in or through the eyelet.

In a further step which in particular is performed manually, the trap element 44 is moved, or bent from the open position (Fig. 3) to the closed position (Fig. 4) relative to the support element (see, arrow 70 in Fig. 3), thereby reducing the gap width, or closing the gap 50 to trap the eyelet 62 on the fastening element 30. The hole 45 provided in the trap element 44 (not shown in Figs. 3-4) receives the end face 34 of the fastening element 30 to facilitate closing the gap 50. By abutting on the support element 42, or the abutment face 49, the eyelet 62 may be secured between the support element 42 and the trap element 44 by moving the trap element 44 to the closed position. In this way, loose wobbling around by the component 60 during fastening may be prevented. The step of moving the trap element from the open position to the closed position is performed by a tool, or power actuated tool, such as the tool used for driving the fastening element into a support structure, e.g. at the same time as driving the fastening element into the support structure.

In a further step, the fastening element 10 is driven into the support structure when the eyelet 62 is trapped on the fastening element 30 by the fastener 10, or the trap element 44, i.e. when the fastening system is in the configuration shown in Fig. 4. To this end, a fastening tool, or power actuated fastening tool, such as a nail gun or screwdriver may be used, in particular a pole tool, wherein the fastening system is placed on a tool nose of the fastening tool beforehand, in particular manually. The support structure may be a construction element, such as a wall or ceiling, and may be made of concrete, metal or alloy, such as steel, timber or the like. After fastening the fastening system to the support structure, the component may be reshaped, or bent to form a final configuration such as a ceiling hanger to be provided for a suspended ceiling structure.

While the invention has been described with reference to its preferred embodiments, it will be understood by those skilled in the art that various changes may be made and equivalents may be substituted for elements thereof without departing from the true spirit and scope of the invention. All elements and features of the disclosed embodiments may be present individually or in any combination in all other embodiments, as long as not contradicting to each other. In addition, many modifications may be made to adapt a particular situation or material to the teaching of the invention without departing from its essential teachings.

## Claims

1. A fastener for attaching a component having an eyelet to a support structure in a fastening direction, comprising
a fastening element configured to be driven into the support structure and comprising a shaft that has an end face facing in the fastening direction,
a clip member having a support element attached to the fastening element and a trap element configured to be moved from an open position to a closed position,
wherein, in the open position, a gap having a gap width is formed between the trap element and the end face allowing placing the eyelet through the gap and over the end face onto the fastening element, and in the closed position, the gap width is reduced to trap the eyelet on the fastening element.

2. The fastener according to claim 1, wherein in the closed position of the trap element, the gap is completely closed.

3. The fastener according to any one of the preceding claims, wherein the clip member comprises a sheet material having a support section forming the support element, and a trap section forming the trap element.

4. The fastener according to claim 3, wherein the sheet material has a bending section about which the trap section is bent relative to the support section when the trap element is moved from the open position to the closed position.

5. The fastener according to claim 4, wherein the bending section is weakened, or perforated.

6. The fastener according to any one of the preceding claims, wherein the trap element comprises a hole configured to receive the fastening element.

7. The fastener according to any one of the preceding claims, wherein the support element comprises a bumper configured to absorb residual driving energy of the fastening element.

8. The fastener according to any one of the preceding claims, wherein the support element is formed as an end stop for the component, or the eyelet, against the fastening direction.

9. The fastener according to any one of the preceding claims, wherein the end face comprises a pointed or rounded tip pointing in the fastening direction.

10. The fastener according to any one of the preceding claims, wherein the fastening element comprises a nail, a pin, a stud, a rivet, an anchor or a screw.

11. A fastening system comprising the fastener according to any one of the preceding claims and the component.

12. The fastening system according to claim 11, wherein the component comprises a ceiling hanger.

13. A method for attaching a component having an eyelet to a support structure in a fastening direction, comprising
providing a fastening system according to any one of claims 11 and 12, wherein the trap element is in the open position,
placing the eyelet through the gap and over the end face onto the fastening element,
moving the trap element from the open position to the closed position to trap the eyelet on the fastening element,
driving the fastening element into the support structure.

14. The method according to claim 13, wherein moving the trap element from the open position to the closed position comprises bending the trap element relative to the support element.

15. The method according to any one of claims 13 and 14, wherein placing the eyelet onto the fastening element comprises abutting the component, or eyelet, on the support element.
